# FASCICULE DE BREVET EUROPEEN

(11) **EP 1 113 564 B1**
(45) Date de publication et mention de la délivrance du brevet: **18.01.2006**
(21) Numéro de dépôt: 00403550.7
(22) Date de dépôt: 15.12.2000
(51) Int. Cl.: H02K 1/06

(54) **Machine électrique tournante dont le stator et/ou le rotor comporte des évidements périphériques**
Rotierende elektrische Maschine, deren Stator und/oder Rotor mit Randausschnitten versehen ist
Rotary electrical machine the stator and/or rotor of which comprise peripheral slots

(30) Priorité: 30.12.1999 FR 9916730
(43) Date de publication de la demande: 04.07.2001
(73) Titulaire: VALEO EQUIPEMENTS ELECTRIQUES MOTEUR, 94017 Creteil (FR)
(72) Inventeur: Akemakou, Dokou Antoine, 94400 Vitry sur Seine (FR); Pernin, Michel, 78100 Saint Germain en Laye (FR); Phounsombat, Sing Kham, 75103 Paris (FR)
(74) Mandataire: Gamonal, Didier

(56) Documents cités:
- CH-A- 196 052
- US-A- 3 504 153
- PATENT ABSTRACTS OF JAPAN vol. 002, no. 124 (E-064), 18 octobre 1978 (1978-10-18) -& JP 53 089902 A (MITSUBISHI ELECTRIC CORP), 8 août 1978 (1978-08-08)
- PATENT ABSTRACTS OF JAPAN vol. 014, no. 368 (E-0962), 9 août 1990 (1990-08-09) -& JP 02 131339 A (NIPPON DENSO CO LTD), 21 mai 1990 (1990-05-21)
- PATENT ABSTRACTS OF JAPAN vol. 1999, no. 09, 30 juillet 1999 (1999-07-30) -& JP 11 103549 A (SANYO ELECTRIC CO LTD), 13 avril 1999 (1999-04-13)

## Description

L'invention concerne une machine électrique tournante.

L'invention concerne plus particulièrement une machine électrique tournante autour d'un axe, du type comportant un rotor et un stator, et du type dans lequel le rotor et/ou le stator comporte un corps annulaire sensiblement cylindrique qui est constitué par un empilage axial de tôles découpées formant un paquet de tôles.

Généralement les carcasses du rotor et du stator d'une machine électrique tournante sont constituées chacune d'un bloc de tôles feuilletées.

Ce bloc de tôles feuilletées est un empilage de tôles d'acier isolées entre elles pour remédier à la naissance de courants de Foucault susceptibles de provoquer un échauffement nuisible au bon fonctionnement de la machine.

Ces courants de Foucault dans les tôles sont à l'origine de pertes, dites pertes fer, dans la machine.

On connaît déjà des machines électriques tournantes, telles que par exemple des alternateurs à griffes de véhicule automobile, qui comportent des stries à la surface périphérique des griffes d'un rotor pour limiter les pertes fer et un stator comportant des tôles empilées. En variante, la machine comporte un rotor et un stator comportant un empilage de tôles pour formation du circuit magnétique, le rotor étant usiné et ensuite strié.

Généralement ces stries sont réalisées avec un outil à fileter.

Un problème posé par la réalisation de ces stries est que l'outil à fileter est sujet à des usures importantes si les quantités de machines à produire sont élevées.

De plus, la réalisation de stries impose une étape supplémentaire dans le procédé de fabrication de la machine.

Par conséquent, les machines électriques tournantes qui comportent des stries à la surface du rotor sont plus complexes à fabriquer, et donc plus coûteuses.

Pour remédier à ces inconvénients, on a proposé dans le document CH-A-196 052, conforme au préambule de la revendication 1, une machine électrique tournante dans laquelle le bord périphérique externe, respectivement interne, d'au moins certaines tôles délimite avec au moins le bord périphérique externe, respectivement interne, d'une tôle adjacente des évidements périphériques circonférentiels en vue de diminuer les pertes fer dans la machine.

Il peut être souhaitable de simplifier encore la fabrication de la machine électrique tournante.

La présente invention a pour objet de répondre à ce souhait.

Suivant l'invention une machine du type sus-indiquée est caractérisée en ce que le diamètre externe, respectivement interne, de chaque plaque de tôle varie d'au moins un secteur angulaire à un autre entre une valeur de diamètre maximal et une valeur de diamètre minimal, et deux tôles adjacentes sont empilées de manière qu'un secteur angulaire de valeur de diamètre maximal d'une tôle soit en vis-à-vis d'un secteur angulaire de valeur de diamètre minimal d'une tôle adjacente.

Grâce à l'invention on peut utiliser qu'un seul et même outil de découpe des tôles. Ces tôles peuvent être toutes identiques.

La solution est donc simple et économique, tout en permettant une standardisation.

Les investissements sont en outre réduits.

Dans une forme de réalisation, chaque tôle comporte des pattes, qui forment les pôles du rotor et/ou stator, l'une au moins des pattes ayant une taille radiale inférieure à celle des autres pattes.

En jouant sur le nombre de pattes, on fait varier la dimension circonférentielle des évidements.

Selon d'autres caractéristiques de l'invention :
- le bord périphérique externe, respectivement interne, d'une tôle comporte au moins une face biseautée ;
- la ou les faces biseautées de la tôle est réalisée par l'outil de découpe des tôles ;
- les paquets de tôle du rotor et du stator comportent des évidements circonférentiels et le rotor est monté à l'intérieur du stator de manière que ses évidements circonférentiels soient axialement en vis-à-vis des évidements circonférentiels du stator ;
- les paquets de tôle du rotor et du stator comportent des évidements circonférentiels et le rotor est monté à l'intérieur du stator de manière que ses évidements circonférentiels soient décalés axialement par rapport aux évidements circonférentiels du stator.

D'autres avantages de l'invention apparaîtront à la lecture de la description détaillée qui suit pour la compréhension de laquelle on se reportera aux dessins annexés dans lesquels :
- la figure 1 est une demi-vue schématique en coupe axiale qui représente le rotor et le stator d'une machine électrique tournante réalisée selon un premier mode de réalisation de l'invention ;
- les figures 2 et 3 sont des vues similaires à la précédente qui représentent des variantes du premier mode de réalisation ;
- la figure 4 est une vue schématique de face d'une plaque de tôle de rotor d'une machine électrique réalisée selon un second mode de réalisation de l'invention ;
- la figure 5 est vue schématique d'un détail d'empilage des tôles de rotor d'une machine électrique réalisée selon un troisième mode de réalisation de l'invention ;
- les figures 6 à 8 sont des vues similaires à celle de la figure 5 qui représentent des variantes du troisième mode de réalisation.

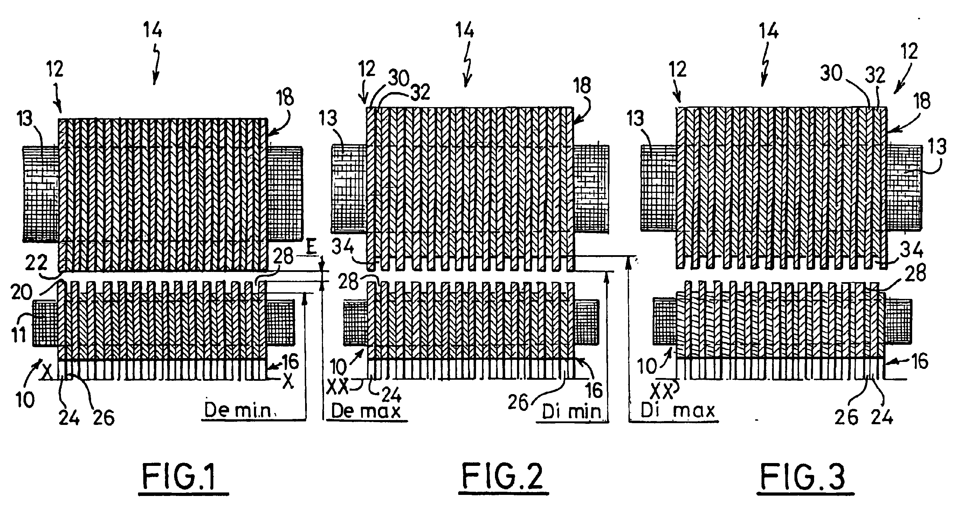

On a représenté schématiquement sur la figure 1 un rotor 10 et un stator 12 d'une machine électrique tournante 14 telle qu'un alternateur ou un moteur électrique de démarreur.

Classiquement le rotor 10 et le stator 12 comportent chacun un corps annulaire 16, 18 sensiblement cylindrique d'axe X-X et dont la structure est feuilletée, c'est à dire que chaque corps annulaire 16, 18 est formé d'un empilage axial de tôles. Ainsi, les tôles sont obtenues à partir de plaques minces de tôle, c'est-à-dire de feuilles de tôle découpées pour former des paquets de tôles.

Le rotor 10 et le stator 12 étant symétriques par rapport à leur axe X-X, ils sont représentés en demi-vue.

Le rotor 10 et le stator 12 comportent aussi des enroulements de bobinage 11 et 13.

Le rotor 10 est monté à rotation autour de l'axe X-X à l'intérieur du stator 12.

L'intervalle radial E qui sépare la face périphérique axiale externe convexe 20 du rotor 10 de la face périphérique axiale interne concave 22 du stator 12 constitue l'entrefer de la machine 14.

Le corps 16 du rotor 10 est constitué d'un empilage axial de tôles de diamètres externes différents formant un paquet de tôles.

On empile alternativement une plaque mince ou feuille de tôle 24 qui, sur au moins un secteur angulaire est de diamètre externe maximal Deₘₐₓ, puis une plaque mince ou feuille de tôle 26 qui sur au moins un secteur angulaire est de diamètre externe minimal Deₘᵢₙ, de manière à former des évidements 28 périphériques circonférentiels dans la face périphérique axiale externe convexe 20 du rotor 10.

Selon une autre variante de réalisation (non représentée) du premier mode de réalisation, on peut inverser les structures et donc appliquer l'invention uniquement au stator 12, qui comporte alors des évidements périphériques circonférentiels dans sa face périphérique axiale interne concave 22, et employer un rotor 10 « lisse » selon l'état de la technique.

On a représenté à la figure 2 une variante du premier mode de réalisation dans laquelle on a réalisé le corps 18 du stator 12 de manière similaire au corps 16 du rotor 10 représenté à la figure 1, c'est-à-dire au moyen d'un empilage axial de tôles avec des secteurs angulaires de diamètres internes différents.

Ainsi, on a empilé alternativement une plaque mince de tôle découpée 30 qui sur au moins un secteur angulaire et de diamètre interne minimal Diₘᵢₙ, puis une plaque mince de tôle découpée 32 qui sur au moins un secteur angulaire est de diamètre interne maximal Diₘₐₓ, de manière à former des évidements 34 périphériques circonférentiels dans la face périphérique axiale interne concave 22 du stator 12.

Selon cette variante on empile axialement les tôles 24, 26, 30, 32 du rotor 10 et du stator 12 de manière que les évidements 28 périphériques circonférentiels du rotor 10 soient axialement en vis-à-vis des évidements 34 périphériques circonférentiels du stator 12.

Selon une autre variante du premier mode de réalisation représentée à la figure 3, on empile axialement les tôles 24, 26, 30, 32 du rotor 10 et du stator 12 de manière que les évidements 28 périphériques circonférentiels du rotor 10 soient décalés axialement par rapport aux évidements 34 périphériques circonférentiels du stator 12.

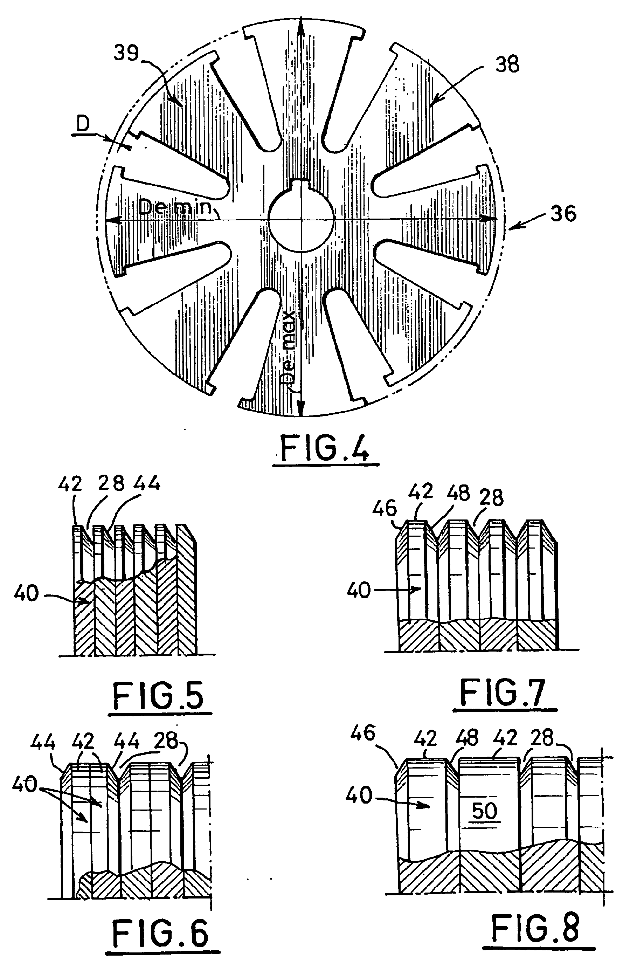

On a représenté à la figure 4 une tôle 36 de rotor 10 sous forme d'une plaque mince ou feuille découpée selon un mode de réalisation de l'invention.

Sur cette figure on distingue des pattes 38, 39, ici au nombre de huit, de la tôle 36 qui forment les pôles du rotor 10. Les pattes 38 sont de taille radiale supérieure à celles des pattes 39.

Conformément aux enseignements de l'invention, cette tôle 36 a son diamètre externe De qui varie d'au moins un secteur angulaire à un autre, entre une valeur de diamètre minimal Deₘᵢₙ et une valeur de diamètre maximal Deₘₐₓ, faisant apparaître un écart ou décalage D entre ces diamètres.

Ici le diamètre externe De varie tous les quarts de tour de manière que deux pattes 39 de diamètre externe minimal Deₘᵢₙ succèdent à deux pattes 38 de diamètre externe maximal Deₘₐₓ.

Une paire de pattes de diamètre externe minimal alterne avec une paire de pattes de diamètre externe maximal.

Pour réaliser un rotor 10 selon l'invention, on empile axialement les plaques 36 de tôle en décalant angulairement, une fois sur deux, une plaque 36 de tôle d'un quart de tour de manière que deux pattes 39 de diamètre externe minimal Deₘᵢₙ d'une tôle 36 soient en vis-à-vis de deux pattes 38 de diamètre externe maximal Deₘₐₓ d'une tôle 36 adjacente.

Cette disposition permet de faire apparaître des portions d'évidements périphériques circonférentiels dans la face périphérique axiale externe convexe 20 du rotor 10.

Ce mode de réalisation permet de n'utiliser qu'un seul et même outil de découpe des tôles 36 qui sont toutes identiques, ce qui réduit les investissements moyennant l'ajout de l'opération d'assemblage consistant à décaler angulairement les tôles 36 une fois sur deux.

D'autre procédés de positionnement des tôles 36 avec un décalage angulaire sont envisageables.

Par exemple en variante trois pattes de diamètre externe minimal succèdent à trois pattes de diamètre externe maximal et on empile les plaques de tôles de manière que trois pattes de diamètre externe minimal d'une tôle soient en vis-à-vis de trois pattes de diamètre externe maximal d'une tôle adjacente.

Il est ainsi possible en jouant sur le nombre de pattes de faire varier circonférentiellement la taille des évidements. En variante chaque tôle ne comporte qu'une seule patte de diamètre interne minimal.

Bien entendu il est possible d'appliquer ce mode de réalisation au stator 12 comportant alors deux pattes de diamètre interne minimal d'une tôle en vis-à-vis de deux pattes de diamètre interne maximal d'une tôle adjacente.

Dans tous les cas chaque tôle du rotor et/ou du stator comporte des pattes, qui forment les pôles du rotor et du stator., l'une au moins des pattes ayant une taille radiale inférieure à celles des autres pattes.

Des pattes de grandes tailles peuvent donc se trouver en vis-à-vis les unes des autres comme visible dans les figures 5 à 8.

Dans tous les cas, des pattes de grande taille sont en vis-à-vis de pattes de petite taille.

On a représenté schématiquement à la figure 5 le détail d'un empilage axial de tôles 40 selon un autremode de réalisation.

Selon ce mode de réalisation le bord périphérique 42 radialement externe de chaque tôle de rotor 10 comporte une face transversale biseautée 44.

Le biseautage des bords périphériques 42 peut être réalisé par tout moyen connu.

De préférence on réalise le biseautage à l'aide de l'outil de découpe (non représenté) des tôles 40, par exemple en utilisant une forme spéciale de l'outil de découpe d'une plaque mince ou feuille de tôle.

L'empilage axial des plaques 40 de tôle du rotor 10 est ici effectué de manière que la face biseautée 44 de chaque plaque 40 de tôle soit orientée axialement du même côté. Cette disposition permet de faire apparaître un évidement 28 périphérique circonférentiel entre chaque tôle 40 et une tôle 40 adjacente.

Selon une variante de ce mode de réalisation, qui est représentée à la figure 6, une fois sur deux on retourne une tôle 40 du rotor 10 de manière qu'un évidement 28 périphérique circonférentiel n'apparaisse entre deux tôles 40 qu'une fois sur deux.

Selon une autre variante du troisième mode de réalisation, qui est représentée à la figure 7, le bord périphérique 42 externe de chaque tôle 40 de rotor 10 comporte deux faces opposées biseautées 46, 48.

Ainsi, quel que soit le sens de montage des tôles 40, il y a un évidement 28 périphérique circonférentiel entre chaque paire de tôles 40 adjacentes.

Selon encore une variante du troisième mode de réalisation, qui est représentée à la figure 8, on empile alternativement une tôle 40 dont le bord périphérique 42 externe comporte deux faces biseautées 46, 48, puis une tôle 50 dont le bord périphérique 42 externe n'est pas biseauté.

Selon cette variante il y aussi un évidement périphérique circonférentiel 28 entre chaque paire de tôles 40, 50 adjacentes.

Bien entendu, les modes de réalisation décrits en référence à un rotor 10 sont applicables à un stator 12.

Il est aussi possible de combiner les modes de réalisation entre eux, par exemple en agençant les tôles 40 biseautées selon une disposition semblable au mode de réalisation dans lequel les évidements 28 périphériques circonférentiels du rotor 10 sont en vis-à-vis des évidements 34 périphériques circonférentiels du stator 12, etc.

Bien entendu, les tôles n'ont pas forcément une forme plane. Elles sont agencées en paquet de tôles.

## Revendications

1. Machine électrique tournante (14) autour d'un axe (X-X), du type comportant un rotor (10) et un stator (12), et du type dans lequel le rotor (10) et/ou le stator (12) comporte un corps annulaire (16, 18) sensiblement cylindrique qui est constitué par un empilage axial de tôles découpées formant un paquet de tôles comportant des évidements périphériques circonférentiels (28, 34) en vue de diminuer les pertes fer dans la machine (14), **caractérisée en ce que** le diamètre externe (De), respectivement interne (Di), de chaque tôle (36) varie d'au moins un secteur angulaire à un autre entre une valeur de diamètre maximal (Deₘₐₓ) et une valeur de diamètre minimal (Deₘᵢₙ), et **en ce que** deux tôles (36) adjacentes sont empilées de manière qu'un secteur angulaire de valeur de diamètre maximal (Deₘₐₓ) d'une tôle (36) soit en vis-à-vis d'un secteur angulaire de valeur de diamètre minimal (Deₘᵢₙ) d'une plaque de tôle (36) adjacente.

2. Machine (14) selon la revendication précédente, **caractérisée en ce que** les paquets de tôle du rotor (10) et du stator (12) comportent des évidements périphériques circonférentiels (28, 34) et **en ce que** le rotor (10) est monté à l'intérieur du stator (12) de manière que ses évidements périphériques circonférentiels (28) soient axialement vis-à-vis des évidements périphériques circonférentiels (34) du stator (12).

3. Machine (14) selon la revendication 1, **caractérisée en ce que** les paquets de tôles du rotor (10) et du stator (12) comportent des évidements périphériques circonférentiels et **en ce que** le rotor (10) est monté à l'intérieur du stator (12), de manière à ce que ses évidements périphériques circonférentiels soient décalés axialement par rapport aux évidements périphériques circonférentiels du stator (12).

4. Machine (14) selon l'une quelconque des revendications précédentes, **caractérisée en ce que** le bord périphérique externe (42), respectivement interne, d'une tôle (40) comporte au moins une face (44, 48) biseautée, et **en ce que** la ou les faces (44, 48) biseautées de la tôle (40) est réalisée par l'outil de découpe des tôles (40).

5. Machine selon l'une quelconque des revendications 1 à 4, **caractérisée en ce que** chaque tôle comporte des pattes (38,39 qui forment des pôles du rotor (10) et/ou du stator (12) et **en ce qu'**au moins l'une des pattes a une taille radiale inférieure à celle des autres pattes pour formation desdits évidements.

6. Machine selon l'une quelconque des revendications 1 à 5, **caractérisée en ce que** chaque tôle comporte des pattes (38,39) qui forment des pôles du rotor (10) et **en ce que** le diamètre externe (De) varie tous les quarts de tours de manière à ce que deux pattes (39) de diamètre externe minimal (Deₘᵢₙ) succèdent à deux pattes (38) de diamètre externe maximal (Deₘₐₓ).

## Claims

1. A rotary electrical machine (14) having an axis of rotation (X-X), of the type comprising a rotor (10) and a stator (12), and of the type in which the rotor (10) and/or the stator (12) has a substantially cylindrical annular body (16, 18) which consists of an axial stack of press-formed laminations constituting a laminated body which includes circumferential peripheral openings (28, 34) for reducing iron losses in the machine (14), **characterised in that** the outer diameter (De) and inner diameter (Di) respectively of each lamination (36) varies from at least one angular sector to another between a maximum value of diameter (Deₘₐₓ) and a minimum value of diameter (Deₘᵢₙ), and **in that** two adjacent laminations (36) are stacked in such a way that an angular sector having the maximum value of diameter (Deₘₐₓ) of a lamination (36) is in facing relationship with an angular sector having the minimum value of diameter (Deₘᵢₙ) of an adjacent lamination (36).

2. A machine (14) according to Claim 1, **characterised in that** the laminated bodies of the rotor (10) and stator (12) include circumferential peripheral openings (28, 34), and **in that** the rotor (10) is mounted inside the stator (12) in such a way that its circumferential peripheral openings (28) are in axial facing relationship with the circumferential peripheral openings (34) of the stator (12).

3. A machine (14) according to Claim 1, **characterised in that** the laminated bodies of the rotor (10) and stator (12) have circumferential peripheral openings, and **in that** the rotor (10) is mounted inside the stator (12), in such a way that its circumferential peripheral openings are offset axially with respect to the circumferential peripheral openings of the stator (12).

4. A machine (14) according to any one of the preceding Claims, **characterised in that** the external and internal faces (42) of a lamination (40), respectively, include at least one bevelled face (44, 48), and **in that** the or each bevelled face (44, 48) of the lamination (40) is formed by the press tool by which the laminations (40) are formed.

5. A machine according to any one of Claims 1 to 4, **characterised in that** each lamination includes lugs (38, 39) which form poles of the rotor (10) and/or of the stator (12), and **in that** at least one of the lugs has a radial dimension smaller than that of the other lugs whereby to define the said openings.

6. A machine according to any one of Claims 1 to 5, **characterised in that** each lamination has lugs (38, 39) which define poles of the rotor (10), and **in that** the external diameter (De) varies every quarter of a turn, so that two lugs (39) of minimum outer diameter (Deₘᵢₙ) are arranged in succession with two lugs (38) having maximum external diameter (Deₘₐₓ).

## Patentansprüche

1. Um eine Achse (X-X) rotierende elektrische Maschine (14) mit einem Rotor (10) und einem Stator (12), wobei der Rotor (10) und/oder der Stator (12) einen in etwa zylindrischen ringförmigen Körper (16, 18) umfasst, der aus einer axialen Schichtung von zugeschnittenen Blechen besteht, die ein Blechpaket mit umfangsmäßigen Randaussparungen (28, 34) im Hinblick auf eine Verringerung der Eisenverluste in der Maschine (14) bilden, **dadurch gekennzeichnet, dass** sich der Außen- (De) bzw. Innendurchmesser (Di) jedes Blechs (36) von wenigstens einem Winkelsektor zu einem anderen zwischen einem maximalen Durchmesserwert (Deₘₐₓ) und einem minimalen Durchmesserwert (Deₘᵢₙ) verändert und **dass** zwei benachbarte Bleche (36) so geschichtet sind, dass sich ein Winkelsektor mit maximalem Durchmesserwert (Deₘₐₓ) eines Blechs (36) gegenüber einem Winkelsektor mit minimalem Durchmesserwert (Deₘᵢₙ) einer benachbarten Blechplatte (36) befindet.

2. Maschine (14) nach dem vorangehenden Anspruch, **dadurch gekennzeichnet, dass** die Blechpakete des Rotors (10) und des Stators (12) umfangsmäßige Randaussparungen (28, 34) umfassen und **dass** der Rotor (10) so im Innern des Stators (12) eingebaut ist, dass sich seine umfangsmäßigen Randaussparungen (28) axial gegenüber den umfangsmäßigen Randaussparungen (34) des Stators (12) befinden.

3. Maschine (14) nach Anspruch 1, **dadurch gekennzeichnet, dass** die Blechpakete des Rotors (10) und des Stators (12) umfangsmäßige Randaussparungen umfassen und **dass** der Rotor (10) so im Innern des Stators (12) eingebaut ist, dass seine umfangsmäßigen Randaussparungen im Verhältnis zu den umfangsmäßigen Randaussparungen des Stators (12) axial versetzt sind.

4. Maschine (14) nach einem der vorangehenden Ansprüche, **dadurch gekennzeichnet, dass** der äußere bzw. innere Umfangsrand (42) eines Blechs (40) wenigstens eine abgeschrägte Fläche (44, 48) umfasst und **dass** die abgeschrägte(n) Fläche(n) (44, 48) des Blechs (40) durch das Schneidwerkzeug zum Schneiden der Bleche (40) ausgeführt ist.

5. Maschine nach einem der Ansprüche 1 bis 4, **dadurch gekennzeichnet, dass** jedes Blech Ansätze (38, 39) umfasst, die die Pole des Rotors (10) und/oder des Stators (12) bilden, und **dass** wenigstens einer der Ansätze eine radiale Größe aufweist, die kleiner als die der anderen Ansätze ist, um die besagten Aussparungen zu bilden.

6. Maschine nach einem der Ansprüche 1 bis 5, **dadurch gekennzeichnet, dass** jedes Blech Ansätze (38, 39) umfasst, die die Pole des Rotors (10) bilden, und dass sich der Außendurchmesser (De) alle Viertelumdrehungen verändert, so dass zwei Ansätze (39) mit minimalem Außendurchmesser (Deₘᵢₙ) auf zwei Ansätze (38) mit maximalem Außendurchmesser (Deₘₐₓ) folgen.
